# EUROPÄISCHE PATENTSCHRIFT

(11) **EP 2 532 042 B1**
(45) Veröffentlichungstag und Bekanntmachung des Hinweises auf die Patenterteilung: **11.05.2016**
(21) Anmeldenummer: 10800926.7
(22) Anmeldetag: 21.12.2010
(51) Int. Cl.: H01M 10/42, H02J 7/00, H01M 10/44

(54) **BATTERIE MIT INDUKTIVEM CELL-BALANCING**
BATTERY HAVING INDUCTIVE CELL BALANCING
BATTERIE À ÉQUILIBRAGE INDUCTIF DES CELLULES

(30) Priorität: 01.02.2010 DE 102010001423
(43) Veröffentlichungstag der Anmeldung: 12.12.2012
(73) Patentinhaber: Samsung SDI Co., Ltd., Gyeonggi-do (KR); Robert Bosch GmbH, 70442 Stuttgart (DE)
(72) Erfinder: HASENKOPF, Dirk, 70190 Stuttgart (DE)
(74) Vertreter: Bee, Joachim
(86) Internationale Anmeldenummer: PCT/EP2010/070368
(87) Internationale Veröffentlichungsnummer: WO 2011/091919

(56) Entgegenhaltungen:
- WO-A1-95/00978
- WO-A1-2010/108758
- US-A1- 2009 195 079

## Beschreibung

### Stand der Technik

Die Erfindung geht von einer Batterie mit Cell-Balancing zum Ausgleich des Ladezustandes der einzelnen in der Batterie in Serie geschalteten Batteriezellen aus.

Für die Zukunft ist sowohl bei stationären Anwendungen, wie z.B. Windkraftanlagen, Notstromaggregaten oder Inselnetzen, als auch in Fahrzeugen, wie beispielsweise Hybrid- oder reinen Elektrofahrzeugen, zu erwarten, dass vermehrt Batteriesysteme zum Einsatz kommen werden, an die hohe Anforderungen bezüglich nutzbarem Energieinhalt, Lade-Entlade-Wirkungsgrad und Zuverlässigkeit gestellt werden. Um den Anforderungen hinsichtlich verfügbarem Energieinhalt, maximaler Leistung und Gesamtspannung gerecht zu werden, werden viele einzelne Batteriezellen in Serie und teilweise zusätzlich parallel geschaltet. Eine solche hohe Zahl von in Serie geschalteten Batteriezellen bringt einige Probleme mit sich. Aus Sicherheitsgründen und zur Erzielung einer hinreichenden Genauigkeit bei der Spannungsmessung müssen die Zellspannungen der einzelnen Batteriezellen einzeln gemessen und auf die Einhaltung von Ober- und Untergrenzen hin überprüft werden. Wegen der Serienschaltung der Batteriezellen werden alle Batteriezellen vom gleichen Strom durchflossen, d.h., die Menge der beim Entladen entnommenen bzw. beim Aufladen eingebrachten Ladung ist auch für alle Batteriezellen identisch. Weicht daher die Kapazität einer Batteriezelle (etwa durch Alterung) von der einer anderen ab, können die Batteriezellen mit einer höheren Kapazität nur so weit aufgeladen werden, wie die Batteriezelle mit der niedrigsten Kapazität. Außerdem führt der Defekt einer einzelnen Batteriezelle zum Ausfall der gesamten Batterie, weil kein Strom mehr durch die defekte Batteriezelle und damit durch die Batterie fließen kann.

Ein Maß für die in einer Batteriezelle gespeicherte Energiemenge ist der so genannte Ladezustand oder State-of-Charge (SoC). Von ihm hängt neben anderen Parametern auch die Klemmenspannung einer Batteriezelle ab. Die anfänglichen Ladezustände der Batteriezellen beim Zusammenbau zu einer Batterie werden nie genau gleich sein. Außerdem unterscheiden sich die Batteriezellen immer geringfügig in ihren Parametern und somit auch in ihrer Reaktion des Ladezustandes auf einen von außen eingeprägten Strom. Durch Alterung der Batteriezellen können sich diese Unterschiede weiter vergrößern. Bei einer Serienschaltung von Batteriezellen gibt es jedoch keine Möglichkeit, die vorgenannten Unterschiede individuell auszugleichen. Regelungstechnisch betrachtet ist das Gesamtsystem nicht vollständig steuerbar, da einer Stellgröße, dem Ladestrom, eine der Anzahl von Batteriezellen entsprechende Menge Zustandsgrößen gegenüberstehen. Daher könnte bei Betrieb einer solchen Batterie ohne weitere Schaltungsmaßnahmen nicht ausgeschlossen werden, dass sich die Ladezustände der einzelnen Batteriezellen immer weiter voneinander entfernen. Beim Entladen der Batterie bestimmt jedoch die Batteriezelle mit dem geringsten Ladezustand den Zeitpunkt, von dem an der Batterie keine elektrische Energie mehr entnommen werden kann, was eine Ausnutzung des maximalen Energieinhaltes der Batterie verhindert und eine Überdimensionierung der Batterie zur Folge hätte. Um eine ungleiche Entladung der Batteriezellen zu verhindern, wird daher ein sog. Cell-Balancing durchgeführt, welches sicherstellen soll, dass jede Batteriezelle auch mit steigendem Alter wenigstens näherungsweise denselben Energieinhalt aufweist. Stand der Technik ist dabei ein resistives Cell-Balancing, d.h. einer Batteriezelle mit überdurchschnittlicher Zellspannung wird ein Widerstand parallel geschaltet, um die Batteriezelle so zu entladen. Dies hat jedoch den Nachteil, dass die überschüssige Energie einer Batteriezelle schlicht ungenutzt in Wärme umgesetzt wird, welche zusätzliche Probleme bei der Wärmeabführung nach sich ziehen kann.

### Offenbarung der Erfindung

Um die Mängel des oben genannten Standes der Technik zu überwinden, führt die Erfindung eine Batterie gemäß Anspruch 1.

Durch ein solches induktives Cell-Balancing kann elektrische Energie von einer Batteriezelle zu einer anderen (benachbarten) Batteriezelle übertragen werden, so dass die oben beschriebenen Vorteile der Angleichung der Ladezustände der einzelnen Batteriezellen erreicht werden, ohne die eine Batteriezelle mit einem größeren Energieinhalt entnommene elektrische Energie zu vergeuden. Der Einsatz des zweiten Schalters anstelle beispielsweise einer Diode besitzt den Vorteil, dass nur ein geringer Leistungsverlust beim Transfer der Energie auftritt. Eine Diode hätte den Nachteil, dass eine von der gegenüber einer typischen Zellspannung gegenüber relativ großen Schwellspannung der Diode abhängige Verlustleistung in der Diode anfiele. Durch Einsatz eines Schalters anstelle der Diode wird diese Verlustleistung deutlich verringert, weil ein geschlossener Schalter nur einen sehr geringen Leitungswiderstand aufweist.

Die Batterie besitzt einen regelmäßigen Aufbau und eine Anzahl n Batteriezellen, wobei n eine gerade Zahl größer als 1 ist, eine Anzahl (n-1) Spulen, eine Anzahl (n-1) erster Schalter und eine Anzahl (n-1) zweiter Schalter aufweisen. Jede Spule weist dabei ein erstes und ein zweites Ende auf und jedes erste Ende der Spulen ist mit einem zugeordneten Minuspol der Batteriezellen und jeder Minuspol der Batteriezellen mit einem ersten Ende der Spulen verbunden. Die (n-1) ersten Schalter sind zwischen den Pluspol einer zugeordneten Batteriezelle und das zweite Ende einer zugeordneten Spule geschaltet. Die (n-1) zweiten Schalter sind zwischen das zweite Ende einer zugeordneten Spule und den Minuspol einer zugeordneten Batteriezelle geschaltet. Eine solche Batterie kann modular leicht an die für eine Anwendung gegebenen Anforderungen durch Wählen eines geeigneten n angepasst werden. Es ist für jede Batteriezelle möglich, Energie an eine wählbare direkt benachbarte andere Batteriezelle zu übertragen.

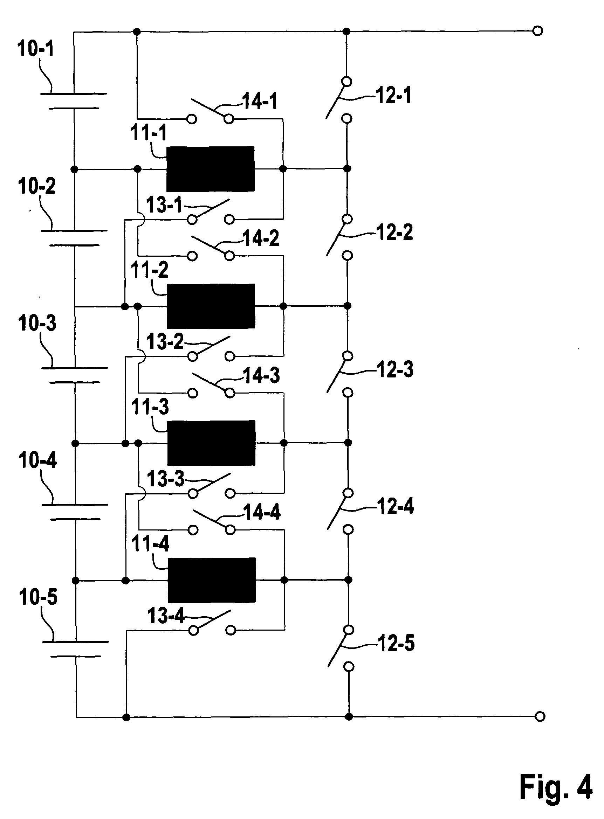

Die Batterie weist eine Anzahl n Batteriezellen, wobei n eine gerade Zahl größer als 1 ist, eine Anzahl n erster Schalter, eine Anzahl (n-1) zweiter Schalter, eine Anzahl (n-1) dritter Schalter und eine Anzahl (n-1) Spulen auf. Die n ersten Schalter sind zwischen dem positiven Ausgangsterminal der Batterie und dem negativen Ausgangsterminal der Batterie seriengeschaltet und jeder von (n-1) Verbindungspunkten zwischen einem m-ten ersten Schalter und einem (m-1)-ten ersten Schalter ist mit dem Pluspol einer m-ten Batteriezelle über genau eine der n Spulen verbunden. Dabei nimmt m jede ganzzahlige Zahl zwischen 2 und n an. Das erste Ende eines (m-1)-ten der (n-1) zweiten Schalter ist mit dem (m-1)-ten Verbindungspunkt und das zweite Ende des (m-1)-ten der (n-1) zweiten Schalter mit dem Minuspol der m-ten Batteriezelle verbunden. Die (n-1) dritten Schalter weisen ein mit dem Pluspol der (m-1)-ten Batteriezelle verbundenes erstes Ende und ein mit dem (m-1)-ten Verbindungspunkt verbundenes zweites Ende auf und sind ausgebildet, auf ein von dem Controller erzeugtes drittes Steuersignal hin den Pluspol der (m-1)-ten Batteriezelle mit dem (m-1)-ten Verbindungspunkt zu verbinden. Ein Beispiel für einen solchen regelmäßigen Aufbau ist in Fig. 4 dargestellt. Es ist hier möglich, gleichzeitig Energie von einer Batteriezelle an beide direkt benachbarten Batteriezellen zu übertragen.

Bevorzugt sind die zweiten Schalter bzw. ggf. die dritten Schalter als MOS-Transistoren ausgeführt. Auch die ersten Schalter können selbstredend als MOS-Transistoren ausgeführt sein. MOS-Transistoren weisen im durchgeschalteten Zustand eine geringe Drain-Source-Spannung auf, so dass die in ihnen anfallende Verlustleistung entsprechend gering ist und können nahezu verzögerungsfrei zwischen leitendem und sperrendem Zustand umgeschaltet werden.

Bevorzugt werden MOS-Transistoren eingesetzt, die eine Body-Diode mit einer Anode und einer Kathode aufweisen, wobei die Kathode mit dem Pluspol einer jeweiligen Batteriezelle und die Anode mit dem Minuspol der jeweiligen Batteriezelle verbunden sind.

Der Controller ist ausgebildet, in einer ersten Zeitperiode das erste Steuersignal an den p-ten ersten Schalter auszugeben und in einer sich an die erste Zeitperiode anschließenden zweiten Zeitperiode die Ausgabe des ersten Steuersignals zu beenden und das zweite und/oder das dritte Steuersignal an den p-ten zweiten bzw. dritten Schalter auszugeben.

Bei einem besonders bevorzugten Ausführungsbeispiel einer solchen Batterie, welche zudem MOS-Transistoren mit Body-Diode als zweite bzw. dritte Schalter aufweist, ist der Controller ausgebildet, einen Umschaltzeitpunkt zwischen der zweiten Zeitperiode und einer auf die zweite Zeitperiode folgenden dritten Zeitperiode so zu wählen, dass ein Freilaufstrom durch den zweiten und/oder dritten Schalter während der zweiten Zeitperiode keinen Vorzeichenwechsel aufweist, und während der dritten Zeitperiode das zweite und/oder dritte Steuersignal nicht auszugeben. Dies führt dazu, dass der restliche Freilaufstrom durch die Body-Diode des am Umschaltzeitpunkt ausgeschalteten zweiten bzw. dritten Schalters fließt und diese durchschaltet. Dies hat zwar für den kurzen verbleibenden Zeitraum, bis der Freilaufstrom Null erreicht, den oben erwähnten Nachteil einer erhöhten Verlustleistung, stellt aber sicher, dass in der jeweiligen Spule kein Strom mit umgekehrten Vorzeichen fließen kann, was die aufzuladende Batteriezelle wieder entladen und dem gewünschten Cell-Balancing entgegenwirken würde. Die Verlustleistung erhöht sich zudem nur wenig, da der Zeitraum, in dem die Body-Diode des Schalters den verbleibenden Freilaufstrom führt, gegenüber der ersten Zeitperiode kurz und der Betrag des verbleibenden Freilaufstroms gegenüber demjenigen während der ersten Zeitperiode gering sind.

Alle Ausführungsformen der Batterie können mit wenigstens einer mit den Batteriezellen verbundenen oder verbindbaren Zellspannungsmesseinheit ausgestattet sein, welche ausgebildet ist, eine Zellspannung der Batteriezellen zu bestimmen und an den Controller zu übermitteln. Der Controller ist dabei ausgebildet, eine Batteriezelle mit einer maximalen Zellspannung auszuwählen und eine Ladung aus der ausgewählten Batteriezelle an eine andere Batteriezelle durch geeignetes Ausgeben von ersten und zweiten Steuersignalen (bzw. ggf. dritten) Steuersignalen zu übertragen.

Ein zweiter Erfindungsaspekt führt eine Spannungsversorgungseinheit mit einem Anschluss an ein elektrisches Energieversorgungsnetz, einem Anschluss für wenigstens einen elektrischen Verbraucher und einem als Batterie ausgeführten elektrischen Energiespeicher ein. Erfindungsgemäß ist der Energiespeicher als Batterie gemäß dem ersten Erfindungsaspekt ausgeführt. Eine solche Spannungsversorgungseinheit kann in einem Inselnetz, einer Notstromversorgung oder anderen stationären Anwendungen eingesetzt werden.

Ein dritter Erfindungsaspekt betrifft ein Kraftfahrzeug mit einem elektrischen Antriebsmotor zum Bewegen des Kraftfahrzeuges und einer mit dem Antriebsmotor verbundenen Batterie nach dem ersten Erfindungsaspekt. Ein solches Kraftfahrzeug kann beispielsweise ein so genanntes Hybrid-Fahrzeug sein.

### Kurzbeschreibung der Abbildungen

Die Erfindung wird im Folgenden anhand einiger Abbildungen von Ausführungsbeispielen näher erläutert. Es zeigen:
Fig. 1 ein erstes Ausführungsbeispiel der Erfindung;
Fig. 2A und 2B ein erstes Betriebsverfahren des ersten Ausführungsbeispiels der Erfindung;
Fig. 3A und 3B ein zweites Betriebsverfahren des ersten Ausführungsbeispiels der Erfindung;
Fig. 4 ein zweites Ausführungsbeispiel der Erfindung; und
Fig. 5A, 5B und 5C beispielhafte Strom- und Spannungskurven für verschiedene Umschaltzeitpunkte bei einem Ausführungsbeispiel mit MOS-Transistoren als Schalter.

### Detaillierte Beschreibung der Abbildungen

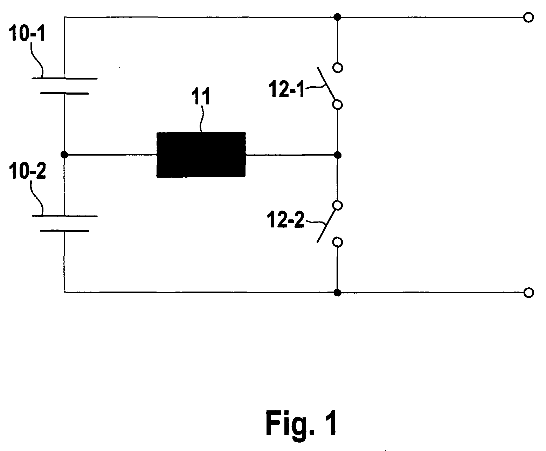

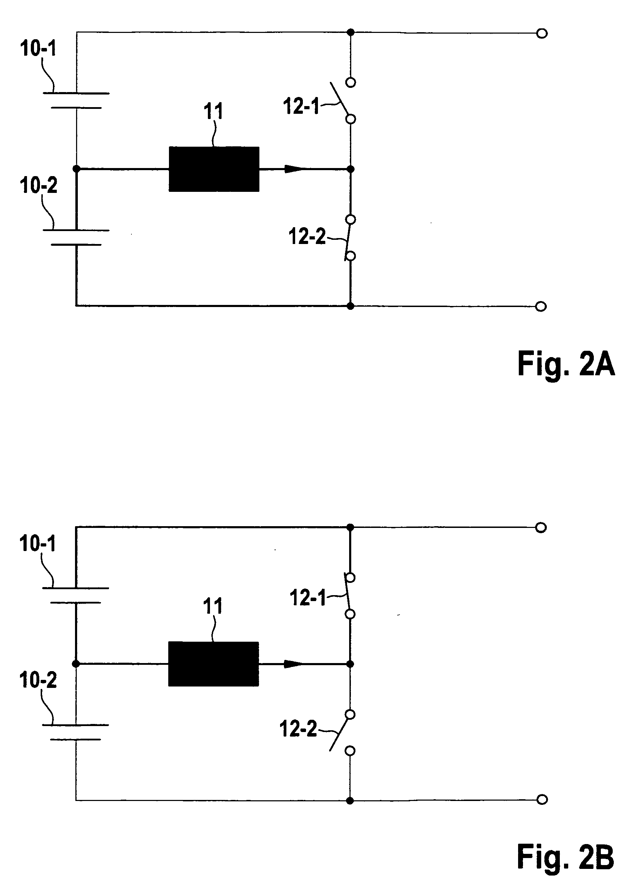

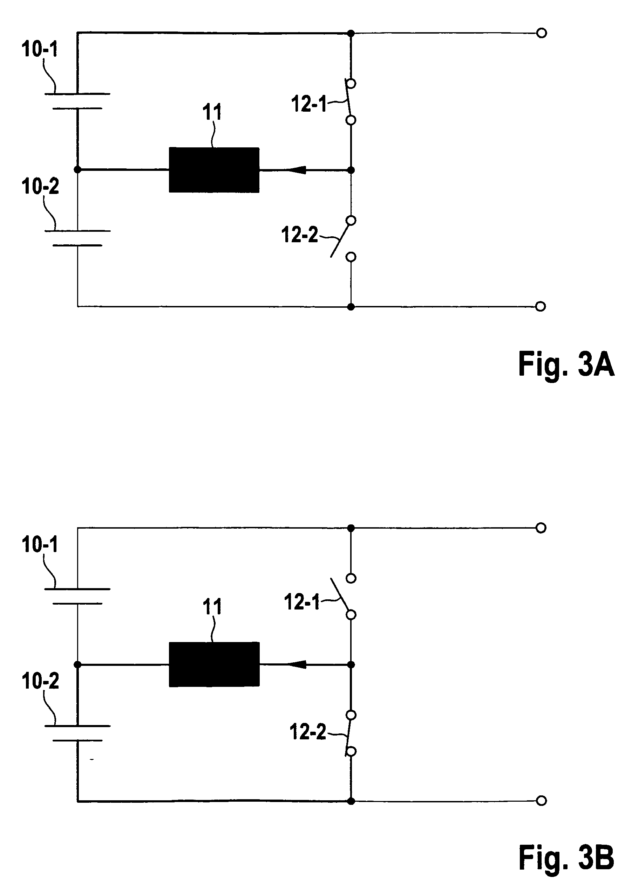

Fig. 1 zeigt ein erstes beispiel eines Ladeausgleichsschaltlereises. Das erste Ausführungsbeispiel stellt eine minimale Implementierung der Erfindungsidee mit zwei Batteriezellen 10-1 und 10-2, einer Spule 11 und zwei Schaltern 12-1 und 12-2. Die Batterie von Fig. 1 erlaubt es durch die Beschaltung mit der Spule 11 und den zwei Schaltern 12-1 und 12-2, von jeder der Batteriezellen 10-1 bzw. 10-2 Energie in die jeweils andere zu übertragen. Dies wird im Folgenden anhand der Fig. 2A und 2B für den Transfer von Energie von Batteriezelle 10-2 zur Batteriezelle 10-1 und Fig. 3A und 3B für die umgekehrte Richtung erläutert.

Fig. 2A und 2B zeigen ein erstes beispielhaftes Betriebs eines Ladeausgleichsschaltlereises verfahren bei dem Energie von der Batteriezelle 10-2 zur Batteriezelle 10-1 übertragen wird. Auf diese Weise kann ein höherer Ladungsstand der Batteriezelle 10-2 gegenüber dem der Batteriezelle 10-1 ausgeglichen werden. In einer ersten Zeitperiode (Fig. 2A) wird der Schalter 12-2 geschlossen, so dass ein Strom aus der Batteriezelle 10-2 durch die Spule 11 zu fließen beginnt. In einer auf die erste Zeitperiode folgenden zweiten Zeitperiode wird nun der Schalter 12-2 wieder geöffnet und möglichst gleichzeitig der Schalter 12-1 geschlossen. Die im Magnetfeld der Spule 11 gespeicherte und der Batteriezelle 10-2 entnommene Energie bewirkt, dass die Spule weiterhin einen Strom ausgibt, wodurch sich das Magnetfeld abbaut. Durch das Schließen des Schalters 12-1 ist die Spule nun jedoch mit dem Pluspol der Batteriezelle 10-1 verbunden, so dass der von der Spule ausgegebene Strom nun mehr als Ladestrom für die Batteriezelle 10-1 fungiert. Abgesehen von ohmschen Verlusten aufgrund nichtidealer Bauelemente kann auf diese Weise nahezu verlustfrei Energie von der Batteriezelle 10-2 zur Batteriezelle 10-1 transferiert werden, wodurch ein Cell-Balancing möglich wird, das nicht die Nachteile des resistiven Cell-Balancings des Standes der Technik aufweist. Anstelle des Schalters 12-1 könnte auch eine Diode eingesetzt werden, dies hätte jedoch höhere Verluste beim Energietransfer und eine geringere Flexibilität der Schaltung zur Folge, wie aus dem Beispiel der Fig. 3A und 3B deutlich werden wird.

Fig. 3A und 3B zeigen ein zweites Betriebsverfahren des ersten Beispielsschaltlereises. Der wesentliche Unterschied zum ersten Betriebsverfahren besteht darin, dass nunmehr Energie von der Batteriezelle 10-1 zur Batteriezelle 10-2 übertragen wird. Die Erfindung bietet damit die Möglichkeit, flexibel Energie zwischen den Batteriezellen 10-1 und 10-2 in beliebiger Richtung zu übertragen. In einer ersten Zeitperiode wird nun der Schalter 12-1 geschlossen, während der Schalter 12-2 offen bleibt. Es fließt wiederum ein Strom durch die Spule 11, diesmal jedoch mit umgekehrtem Vorzeichen und aus der Batteriezelle 10-1. In einer zweiten Zeitperiode wird Schalter 12-1 wieder geöffnet und Schalter 12-2 möglichst gleichzeitig geschlossen. Die im Magnetfeld der Spule 11 gespeicherte und der Batteriezelle 10-1 entnommene Energie bewirkt nun einen Ladestrom für die Batteriezelle 10-2.

Fig. 4 zeigt das Ausführungsbeispiel der Erfindung, welches mit fünf seriengeschalteten Batteriezellen ausgeführt ist, jedoch je nach Anwendungsfall mit einer beliebigen Anzahl von drei oder mehr Batteriezellen ausgeführt werden kann. Das Ausführungsbeispiel besitzt einen regelmäßigen Aufbau, so dass es entsprechend einfach an eine geänderte Anzahl Batteriezellen anzupassen ist.

Parallel zu den seriengeschalteten Batteriezellen 10-1 bis 10-5 ist eine entsprechende Anzahl erster Schalter 12-1 bis 12-5 vorgesehen, welche ebenfalls seriengeschaltet sind. Die Verbindungspunkte zwischen den ersten Schaltern 12-1 bis 12-5 sind über jeweils eine Spule 11-1 bis 11-4 mit entsprechenden Verbindungspunkten zwischen den Batteriezellen verbunden. Da die Anzahl der jeweiligen Verbindungspunkte um eins niedriger ist als die der Batteriezellen 10-1 bis 10-5 bzw. der ersten Schalter 12-1 bis 12-5, kommen dementsprechend nur vier Spulen 11-1 bis 11-4 zum Einsatz. Die Schaltung des Ausführungsbeispiels besitzt zudem zweite Schalter 13-1 bis 13-4 und dritte Schalter 14-1 bis 14-4. Somit ist es möglich, von einer Batteriezelle 10-1 bis 10-5 gleichzeitig Energie an beide benachbarten Batteriezellen zu übertragen. Beispielsweise würde durch Schließen des ersten Schalters 12-3 ein Strom aus der Batteriezelle 10-3 durch die Spulen 11-2 und 11-3 fließen und in diesen entsprechende Magnetfelder aufbauen, welche dann nach Öffnen des ersten Schalters 12-3 über den zweiten Schalter 13-3 die Batteriezelle 10-4 und über den dritten Schalter 14-2 die Batteriezelle 10-2 aufladen. Durch die ersten Schalter 12-1 bis 12-5 wird somit eine schnellere Ausführung des Cell-Balancings und eine größere Flexibilität erreicht.

Der Betrieb des Ausführungsbeispiels soll im Folgenden anhand eines Beispiels erläutert werden, in dem die Batteriezelle 10-3 entladen werden soll. In einer ersten Zeitperiode wird der Schalter 12-3 geschlossen, wodurch ein Strom aus der Batteriezelle 10-3 durch die Spulen 11-2 und 11-3 fließt und in jeder der Spulen 11-2 und 11-3 ein Magnetfeld aufbaut. In einer zweiten Zeitperiode werden der Schalter 12-3 wieder geöffnet und möglichst gleichzeitig die Schalter 14-2 und 13-3 geschlossen. Aus der Spule 11-2 fließt so ein Aufladestrom über den Schalter 14-2 in die Batteriezelle 10-2, aus der Spule 11-3 hingegen in die Batteriezelle 10-4. Auf diese Weise kann elektrische Energie von einer Batteriezelle gleichzeitig in die beiden benachbarten Batteriezellen transferiert werden.

Soll elektrische Energie von einer Batteriezelle in nur eine benachbarte Batteriezelle übertragen werden, kann wie folgt verfahren werden (wiederum am Beispiel der Batteriezelle 10-3):

In einer ersten Zeitperiode wird der Schalter 13-2 geschlossen, wodurch ein Strom aus der Batteriezelle 10-3 durch die Spule 11-2 fließt. In einer zweiten Zeitperiode wird dann der Schalter 13-2 wieder geöffnet und stattdessen der Schalter 14-2 geschlossen, wodurch ein Ladestrom aus der Spule 11-2 in die Batteriezelle 10-2 fließt. Die Batteriezelle 10-4 hingegen wird nicht aufgeladen. Alternativ kann auch Energie von der Batteriezelle 10-3 in die Batteriezelle 10-4 übertragen werden. Hierzu wird zuerst der Schalter 14-3 geschlossen, wodurch Strom aus der Batteriezelle 10-3 durch die Spule 11-3 fließt. Dann wird Schalter 14-3 geöffnet und Schalter 13-3 geschlossen, woraufhin ein Ladestrom in die Batteriezelle 10-4 fließt.

Das Ausführungsbeispiel von Fig. 4 erlaubt es, flexibel elektrische Energie zwischen den einzelnen Batteriezellen zu übertragen und so einen nahezu verlustfreien Ladungszustandsausgleich im Zuge des Cell-Balancing durchzuführen. Dabei ist es möglich, von einer beliebigen Batteriezelle gleichzeitig Energie in die beiden benachbarten Batteriezellen oder aber in nur eine der beiden benachbarten Batteriezellen zu übertragen. In einer weniger komplexen Variante ohne die Schalter 12-1 bis 12-5 entfällt die erstgenannte Option der gleichzeitigen Übertragung an beide benachbarten Batteriezellen, es können jedoch sequentiell Übertragungen an jede der benachbarten Batteriezellen durchgeführt werden.

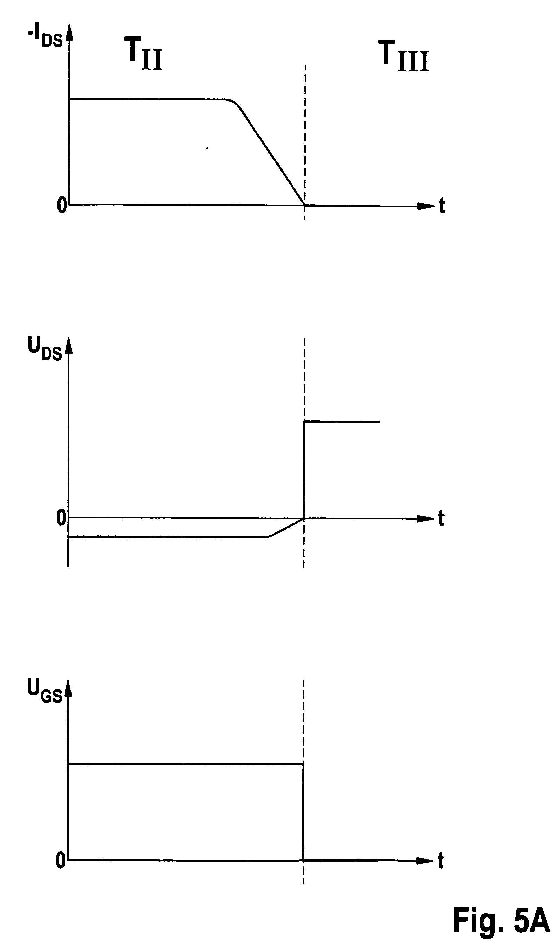

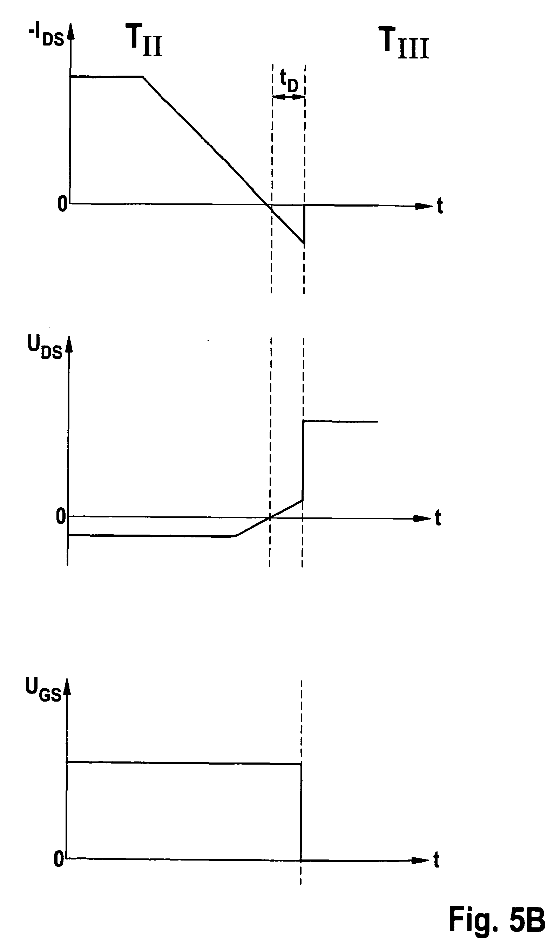

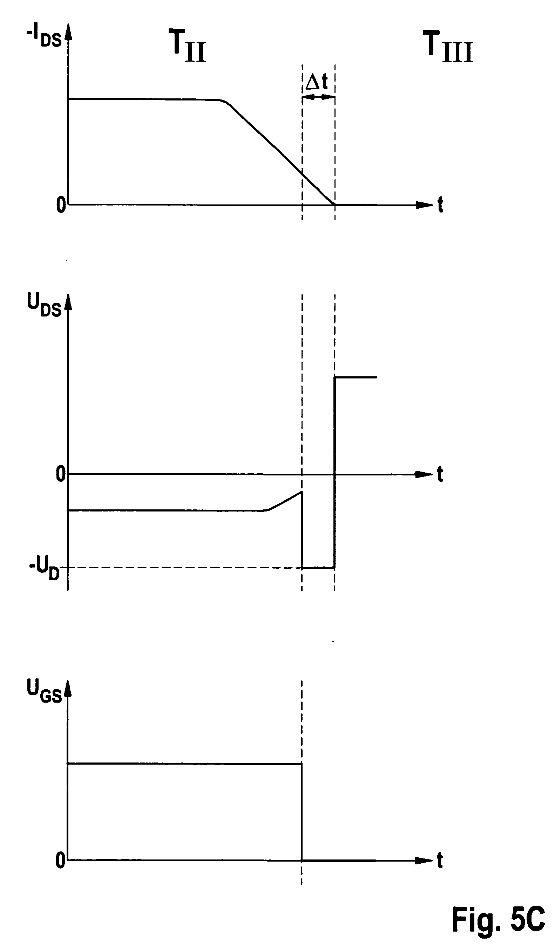

Fig. 5A, 5B und 5C zeigen beispielhafte Strom- und Spannungskurven für verschiedene Umschaltzeitpunkte bei einem Ausführungsbeispiel mit MOS-Transistoren als Schalter. Jeweils ein erstes Teildiagramm zeigt den mit umgekehrtem Vorzeichen aufgetragenen Drainstrom eines Schalters während der zweiten Zeitperiode T_{II} und einer darauf folgenden dritten Zeitperiode T_{III}, welcher dem Aufladestrom einer der Batteriezellen entspricht. Ein zweites Teildiagramm zeigt die jeweils resultierende Drain-Source-Spannung des als Schalters eingesetzten MOS-Transistors. Das dritte Teildiagramm zeigt den zeitlichen Verlauf der Gate-Source-Spannung. Das Beispiel erfolgt für einen NMOS-Transistor, so dass während der zweiten Zeitperiode T_{II} der Transistor durchgeschaltet ist (positive Gate-Source-Spannung) und er während der dritten Zeitperiode T_{III} sperrt (Gate-Source-Spannung gleich Null).

Die Fig. 5A zeigt den optimalen Fall, bei dem die Abschaltung des Transistors in exakt dem Moment erfolgt, in dem der Drainstrom Null wird (Umschaltzeitpunkt zwischen der zweiten Zeitperiode T_{II} und der dritten Zeitperiode T_{III}). Während ein Strom fließt, liegt eine geringe negative Drain-Source-Spannung vor, die Null wird, wenn der Drainstrom ebenfalls Null erreicht. In dem Moment, in dem der Transistor abgeschaltet wird, entspricht die Sperrspannung der Spannung der jeweiligen parallel geschalteten Batteriezelle.

Fig. 5B erläutert den Fall, wenn die Abschaltung des Transistors erst erfolgt, nachdem der Drainstrom bereits das Vorzeichen gewechselt hat (siehe Zeitspanne t_{D}). Es fließt hierdurch wieder ein Strom aus der aufzuladenden Batteriezelle, so dass diese wieder etwas entladen wird und sich wieder ein Magnetfeld in der Spule aufbaut. Aufgrund des Vorzeichenwechsels des Drainstroms ändert auch die Drain-Source-Spannung ihr Vorzeichen. Erst mit dem Abschalten des Transistors wird der Drainstrom dauerhaft Null und die Drain-Source-Spannung steigt auf die Sperrspannung. Es wird deutlich, dass ein zu spätes Ausschalten vermieden werden sollte. Nun kann es schwierig sein, den optimalen Zeitpunkt für das Abschalten des Schalters sicher zu bestimmen. Es ist in einer praktischen Umsetzung der Erfindung daher ratsam, sicherheitshalber die Abschaltung kurz vor dem Nulldurchgang des Drainstromes durchzuführen. Fig. 5C zeigt die resultierenden Beispieldiagramme.

Im ersten Teildiagramm ist wiederum der Drainstrom aufgetragen, welcher noch nicht Null erreicht hat, wenn der Transistor abgeschaltet wird (drittes Teildiagramm). Die Abschaltung des Transistors erfolgt um eine Sicherheitsperiode Δt vor dem Erreichen des Nullpunktes des Drainstroms. Dementsprechend hat auch die Drain-Source-Spannung noch nicht Null erreicht. Da die Spule immer noch ein Restmagnetfeld enthält, welches entladen werden muss, baut die Spule eine steigende Spannung auf, die die Body-Diode des MOS-Transistors durchschaltet, so dass während der Sicherheitsperiode Δt weiterhin ein Strom durch den Transistor fließt. Die Drain-Source-Spannung des Transistors steigt dabei sprunghaft auf die Vorwärtsspannung U_{D} der Diode (aufgrund der Ausrichtung der Body-Diode ist die resultierende Drain-Source-Spannung -U_{D}). Das vorzeitige Ausschalten des Transistors unterbindet somit nicht das Fließen des Ladestroms, stellt jedoch aufgrund der Diodeneigenschaft des ausgeschalteten Transistors sicher, dass die aufzuladende Batteriezelle nicht wieder entladen wird.

## Patentansprüche

1. Eine Batterie mit einer Anzahl n von zwischen einem positiven Ausgangsterminal und einem negativen Ausgangsterminal seriengeschalteten Batteriezellen (10-1, ..., 10-5), wobei n eine gerade Zahl größer als 1 ist,
einer Anzahl n erster Schalter (12-1, ..., 12-5),
einer Anzahl n-1 zweiter Schalter (13-1, ..., 13-4),
einer Anzahl n-1 dritter Schalter (14-1, ..., 14-4) und
einer Anzahl n-1 Spulen (11-1, ..., 11-4),
wobei die n ersten Schalter (12-1, ..., 12-5) zwischen dem positiven Ausgangsterminal und dem negativen Ausgangsterminal seriengeschaltet sind und
jeder von n-1 Verbindungspunkten zwischen einem m-ten ersten Schalter (12-1, ..., 12-5) und einem m-1-ten ersten Schalter (12-1, ..., 12-5) mit dem Pluspol einer m-ten Batteriezelle (10-1, ..., 10-5) über genau eine der n-1 Spulen (11-1, ..., 11-4) verbunden ist,
wobei m jede ganzzahlige Zahl zwischen 2 und n annimmt,
wobei das erste Ende eines m-1-ten der n-1 zweiten Schalter (13-1, ..., 13-4) mit dem m-1-ten Verbindungspunkt und das zweite Ende des m-1-ten der n-1 zweiten Schalter (13-1, ..., 13-4) mit dem Minuspol der m-ten Batteriezelle (10-1, ..., 10-5) verbunden ist und
wobei die n-1 dritten Schalter (14-1, ..., 14-4) ein mit dem Pluspol der m-1-ten Batteriezelle (10-1, ..., 10-5) verbundenes erstes Ende und
ein mit dem m-1-ten Verbindungspunkt verbundenes zweites Ende aufweisen und ausgebildet sind,
auf ein von einem Controller in einer ersten Zeitperiode erzeugtes erstes Steuersignal hin den m-te ersten Schalter (12,-1, 12-2, ..., 12-5) zu schließen, in einer zweiten Zeitperiode der Controller eine Ausgabe des erzeugten ersten Steuersignals zu beenden, wodurch der m-te erste Schalter (12,-1, 12-2, ..., 12-5) wieder geöffnet wird und mittels eines zweiten Steuersignals der m-te zweite Schalter (13-1, ..., 13-4) geschlossen wird und mittels eines dritten Steuersignals der m-1-te dritte Schalter (14-1, ..., 14-4) geschlossen wird, wodurch der Pluspol der (m-1)-ten Batteriezelle (10-1,_{...,} 10-5) mit dem (m-1)-ten Verbindungspunkt verbunden wird.

2. Die Batterie von Anspruch 1, bei der die ersten (12-1; 12-1, ..., 12-5) zweiten Schalter (12-2; 13-1, ..., 13-4) und/oder dritten Schalter (14-1,..., 14-4) als MOS-Transistoren ausgeführt sind.

3. Die Batterie von Anspruch 1, bei der die MOS-Transistoren eine Body-Diode mit einer Anode und einer Kathode aufweisen, wobei die Kathode mit dem Pluspol einer jeweiligen Batteriezelle (10-1, ..., 10-5) und die Anode mit dem Minuspol der jeweiligen Batteriezelle (10-1, ... , 10-5) verbunden sind.

4. Die Batterie von Anspruch 3, bei dem der Controller ausgebildet ist, einen Umschaltzeitpunkt zwischen der zweiten Zeitperiode und einer auf die zweite Zeitperiode folgenden dritten Zeitperiode so zu wählen, dass ein Freilaufstrom durch den zweiten (12-2; 13-1,..., 13-4) und/oder dritten Schalter (14-1,..., 14-4) während der zweiten Zeitperiode keinen Vorzeichenwechsel aufweist, und während der dritten Zeitperiode das zweite und/oder das dritte Steuersignal nicht auszugeben.

5. Die Batterie von einem der vorhergehenden Ansprüche, mit wenigstens einer mit den Batteriezellen (10-1,..., 10-5) verbundenen oder verbindbaren Zellspannungsmesseinheit, welche ausgebildet ist, eine Zellspannung der Batteriezellen (10-1,..., 10-5) zu bestimmen und an den Controller zu übermitteln, wobei der Controller ausgebildet ist, eine Batteriezelle (10-1,..., 10-5) mit einer maximalen Zellspannung auszuwählen und eine Ladung aus der ausgewählten Batteriezelle (10-1,..., 10-5) an eine andere Batteriezelle (10-1,..., 10-5) durch geeignetes Ausgeben von ersten und zweiten Steuersignalen zu übertragen.

6. Eine Spannungsversorgungseinheit mit einem Anschluss an ein elektrisches Energieversorgungsnetz, einem Anschluss für wenigstens einen elektrischen Verbraucher und einem als Batterie ausgeführten elektrischen Energiespeicher, **dadurch gekennzeichnet, dass** der Energiespeicher als Batterie nach einem der vorhergehenden Ansprüche ausgeführt ist.

7. Ein Kraftfahrzeug mit einem elektrischen Antriebsmotor zum Bewegen des Kraftfahrzeuges und einer mit dem Antriebsmotor verbundenen Batterie nach einem der Ansprüche 1 bis 6.

## Claims

1. Battery comprising a number n of battery cells (10-1, ..., 10-5) connected in series between a positive output terminal and a negative output terminal, wherein n is an even number greater than 1,
a number n of first switches (12-1, ..., 12-5),
a number n-1 of second switches (13-1, ..., 13-4),
a number n-1 of third switches (14-1, ..., 14-4) and
a number n-1 of coils (11-1, ..., 11-4),
wherein the n first switches (12-1, ..., 12-5) are connected in series between the positive output terminal and the negative output terminal, and
each of n-1 connection points between an m-th first switches (12-1, ..., 12-5) and m-1-th first switches (12-1, ..., 12-5) is connected to the positive pole of an m-th battery cell (10-1, ..., 10-5) via exactly one of the n-1 coils (11-1, ..., 11-4),
wherein m assumes any integral number between 2 and n, wherein the first end of an m-1-th switch of the n-1 second switches (13-1, ..., 13-4) is connected to the m-1-th connection point and the second end of the m-1-th switch of the n-1 second switches (13-1, ..., 13-4) is connected to the negative pole of the m-th battery cell (10-1, ..., 10-5) and
wherein the n-1 third switches (14-1, ..., 14-4) have a first end connected to the positive pole of the m-1-th battery cell (10-1, ..., 10-5) and a second end connected to the m-1-th connection point and are designed,
in response to a first control signal generated by a controller in a first time period, to close the m-th first switches (12-1, 12-2, ..., 12-5), in a second time period the controller to end an outputting of the first control signal generated, as a result of which the m-th first switch (12-1, 12-2, ..., 12-5) is opened again and the m-th second switch (13-1, ..., 13-4) is closed by means of a second control signal and the m-1-th third switch (14-1, ..., 14-4) is closed by means of a third control signal, as a result of which the positive pole of the (m-1)-th battery cell (10-1, ..., 10-5) is connected to the (m-1)-th connection point.

2. Battery of Claim 1, wherein the first (12-1; 12-1, ..., 12-5) second switches (12-2, 13-1, ..., 13-4) and/or third switches (14-1, ..., 14-4) are embodied as MOS transistors.

3. Battery of Claim 1, wherein the MOS transistors have body diode comprising an anode and a cathode, wherein the cathode is connected to the positive pole of a respective battery cell (10-1, ..., 10-5) and the anode is connected to the negative pole of the respective battery cell (10-1, ..., 10-5).

4. Battery of Claim 3, wherein the controller is designed to select a switching instant between the second time period and a third time period succeeding the second time period such that a freewheeling current through the second (12-2; 13-1, ..., 13-4) and/or third switch (14-1, ..., 14-4) has no change of sign during the second time period, and not to output the second and/or the third control signal during the third time period.

5. Battery of any of the preceding claims, comprising at least one cell voltage measuring unit which is connected or connectible to the battery cells (10-1, ..., 10-5) and is designed to determine a cell voltage of the battery cells (10-1, ..., 10-5) and to communicate it to the controller, wherein the controller is designed to select a battery cell (10-1, ..., 10-5) having a maximum cell voltage and to transmit a charge from the selected battery cell (10-1, ..., 10-5) to another battery cell (10-1, ..., 10-5) by suitable outputting of first and second control signals.

6. Voltage supply unit having a connection to an electrical energy supply network, a connection for at least one electrical load and an electrical energy store embodied as a battery, **characterized in that** the energy store is embodied as a battery according to any of the preceding claims.

7. Motor vehicle comprising an electric drive motor for moving the motor vehicle and a battery according to any of Claims 1 and 6, said battery being connected to the drive motor.

## Revendications

1. Batterie comprenant un nombre n de cellules de batterie (10-1, ..., 10-5) montées en série entre une borne de sortie positive et une borne de sortie négative, dans laquelle n est un entier pair supérieur à 1,
un nombre n de premiers commutateurs (12-1, ..., 12-5), un nombre n-1 de deuxièmes commutateurs (13-1, ..., 13-4),
un nombre n-1 de troisièmes commutateurs (14-1, ..., 14-4) et
un nombre n-1 de bobines (11-1, ..., 11-4), dans laquelle les n premiers commutateurs (12-1, ..., 12-5) sont montés en série entre la borne de sortie positive et la borne de sortie négative et
chacun de n-1 points de connexion entre un m-ème premier commutateur (12-1, ..., 12-5) et un m-1-ème premier commutateur (12-1, ..., 12-5) est connecté au pôle positif d'une m-ème cellule de batterie (10-1, ..., 10-5) par l'intermédiaire d'exactement l'une des n-1 bobines (11-1, 11-4),
dans lequel m prend la valeur de chaque nombre entier compris entre 2 et n,
dans lequel la première extrémité d'un m-1-ème des n-1 deuxièmes commutateurs (13-1, ..., 13-4) est connectée au m-1-ème point de connexion et la deuxième extrémité du m-1-ème des n-1 deuxièmes commutateurs (13-1, ..., 13-4) est connectée au pôle négatif de la m-ème cellule de batterie (10-1, ..., 10-5) et
dans laquelle les n-1 troisièmes commutateurs (14-1, ..., 14-4) présentent une première extrémité connectée au pôle positif de la m-1-ème cellule de batterie (10-1, ..., 10-5) et une deuxième extrémité connectée au m-1-ème point de connexion et sont conçus pour
fermer le m-ème premier commutateur (12-1, 12-2, ..., 12-5) en réponse à un premier signal de commande généré par un contrôleur au cours d'une première période de temps, au cours d'une deuxième période de temps le contrôleur pour interrompre une fourniture du premier signal de commande généré, d'où il résulte que le m-ème premier commutateur (12-1, 12-2, ..., 12-5) est de nouveau ouvert et que le m-ème deuxième commutateur (13-1,..., 13-4) est fermé au moyen d'un deuxième signal de commande et que le m-1-ème troisième commutateur (14-1, ..., 14-4) est fermé au moyen d'un troisième signal de commande, d'où il résulte que le pôle positif de la (m-1)-ème cellule de batterie (10-1, ..., 10-5) est connecté au (m-1)-ème point de connexion.

2. Batterie selon la revendication 1, dans laquelle les premiers (12-1 ; 12-1, ..., 12-5) deuxièmes commutateurs (12-2 ; 13-1, ..., 13-4) et/ou les troisièmes commutateurs (14-1 , ..., 14-4) sont réalisés sous la forme de transistors MOS.

3. Batterie selon la revendication 1, dans laquelle les transistors MOS présentent une diode de substrat ayant une anode et une cathode, dans laquelle la cathode est connectée au pôle positif d'une cellule de batterie respective (10-1, ..., 10-5) et l'anode est connectée au pôle négatif de la cellule de batterie respective (10-1, ..., 10-5).

4. Batterie selon la revendication 3, dans laquelle le contrôleur est conçu pour sélectionner un point de basculement entre la deuxième période de temps et une troisième période de temps faisant suite à la deuxième période de temps de manière à ce qu'un courant de roue libre passant à travers le deuxième commutateur (12-2 ; 13-1, ..., 13-4) et/ou le troisième commutateur (14-1, ..., 14-4) ne présente pas de changement de signe pendant la deuxième période de temps et à ce que le deuxième et/ou le troisième signal de commande ne soit pas délivré pendant la troisième période de temps.

5. Batterie selon l'une quelconque des revendications précédentes, comprenant au moins une unité de mesure de tension de cellule connectée ou pouvant être connectée à au moins l'une des cellules de batterie (10-1, ..., 10-5), laquelle unité de mesure de tension de cellule est conçue pour déterminer une tension de cellule des cellules de batterie (10-1, ..., 10-5) et pour la transmettre au contrôleur, dans lequel le contrôleur est conçu pour sélectionner une cellule de batterie (10-1, ..., 10-5) ayant une tension de cellule maximale et pour transférer une charge de la cellule batterie sélectionnée (10-1, ..., 10-5) à une autre cellule de batterie (10-1, ..., 10-5) en délivrant de manière appropriée des premier et deuxième signaux de commande.

6. Unité d'alimentation en tension comprenant un raccordement à un réseau d'alimentation en énergie électrique, un raccordement destiné à au moins un consommateur électrique et un élément de stockage d'énergie électrique réalisé sous la forme d'une batterie, **caractérisée en ce que** l'unité de stockage d'énergie est réalisée sous la forme d'une batterie selon l'une quelconque des revendications précédentes.

7. Véhicule à moteur comprenant un moteur d'entraînement électrique destiné à propulser le véhicule à moteur et une batterie selon l'une quelconque des revendications 1 à 6, connectée au moteur d'entraînement.
